# EUROPÄISCHE PATENTSCHRIFT

(11) **EP 3 505 393 B1**
(45) Veröffentlichungstag und Bekanntmachung des Hinweises auf die Patenterteilung: **02.12.2020**
(21) Anmeldenummer: 18201425.8
(22) Anmeldetag: 19.10.2018
(51) Int. Cl.: B60N 2/50, B60N 2/90, B60N 2/38

(54) **FAHRZEUGSITZ MIT RÜCKENFEDERUNG UND SITZFLÄCHENVERSTELLUNG**
VEHICLE SEAT WITH BACK SUSPENSION AND ADJUSTMENT OF SEAT SURFACES
SIÈGE DE VÉHICULE POURVU DE RESSORT DU DOSSIER ET RÉGLAGE DE LA SURFACE D'ASSISE

(30) Priorität: 30.11.2017 DE 102017128410
(43) Veröffentlichungstag der Anmeldung: 03.07.2019
(73) Patentinhaber: GRAMMER AG, 92289 Ursensollen (DE)
(72) Erfinder: Haller, Erwin, 92262 Birgland (DE)
(74) Vertreter: Hannke, Christian

(56) Entgegenhaltungen:
- DE-A1-102004 014 333
- US-A- 2 009 024
- US-A- 4 765 679

## Beschreibung

Die Erfindung betrifft einen Fahrzeugsitz mit einem Rückenlehnenteil und einem Sitzflächenteil, welche jeweils mit einem Sitzbasisteil verbunden angeordnet sind, wobei das Rückenlehnenteil gegenüber dem Sitzbasisteil verschwenkbar und federnd gelagert angeordnet ist, und wobei das Sitzflächenteil gegenüber dem Sitzbasisteil zumindest in Sitzlängsrichtung nach vorne und nach hinten verschiebbar angeordnet ist.

Gattungsgemäße Fahrzeugsitze für Off-Road-Fahrzeuge, Trucks, MH-Turf etc. beinhalten zur Isolation von Schwingungen standardmäßig Vorrichtungen, welche die schädigenden Einflüsse vom Fahrer fernhalten bzw. reduzieren. Diese stellen insbesondere Schwingungen in vertikale und horizontale Richtungen dar. Die Schwingungen werden üblicherweise in translatorisch ausgeführten Freiheitsgraden abgebaut. Die Platzierung der Freiheitsgrade werden in den heute bekannten Systemen zum einen in den Vertikalfederungen umgesetzt, zum anderen als eigene Module in das Gesamtsystem des Fahrzeugsitzes integriert.

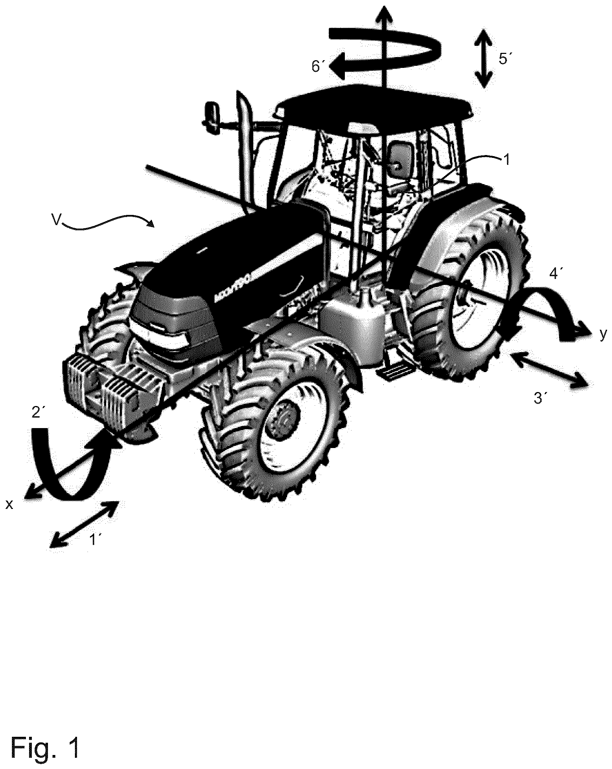

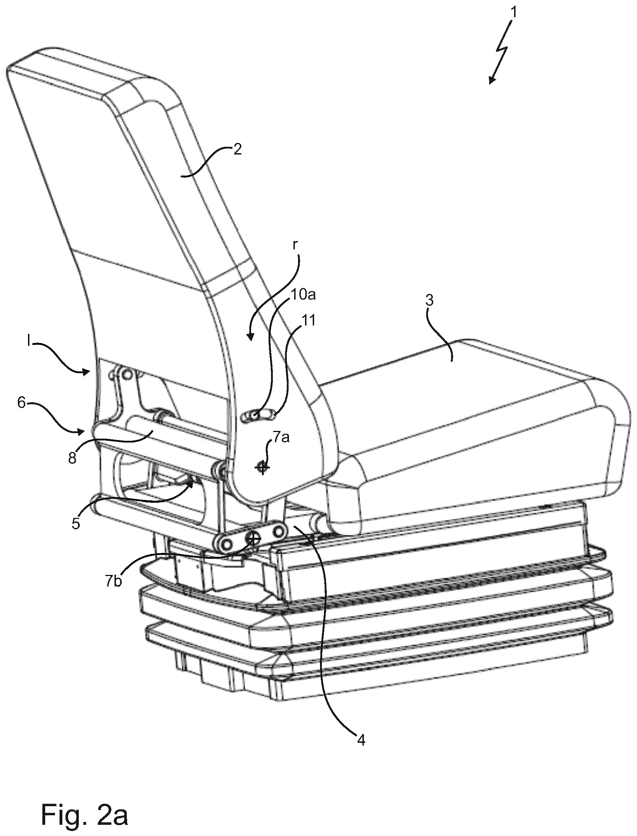

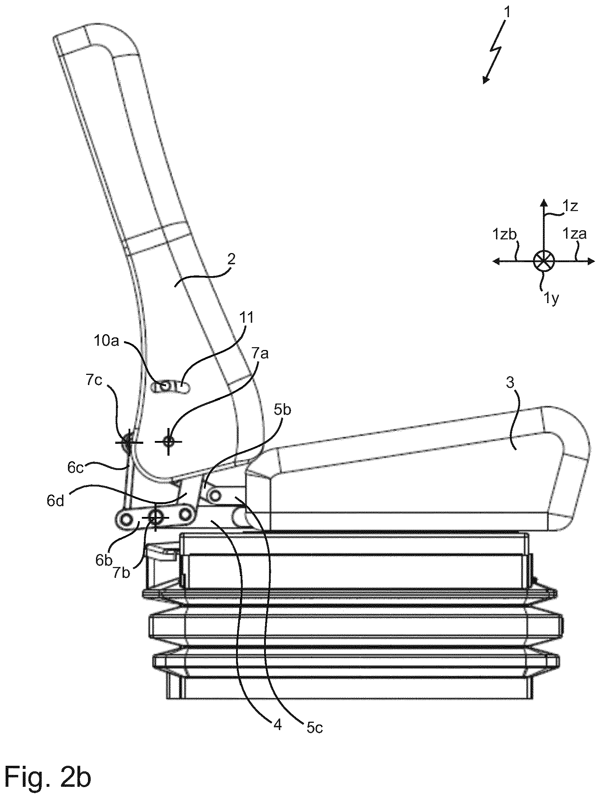

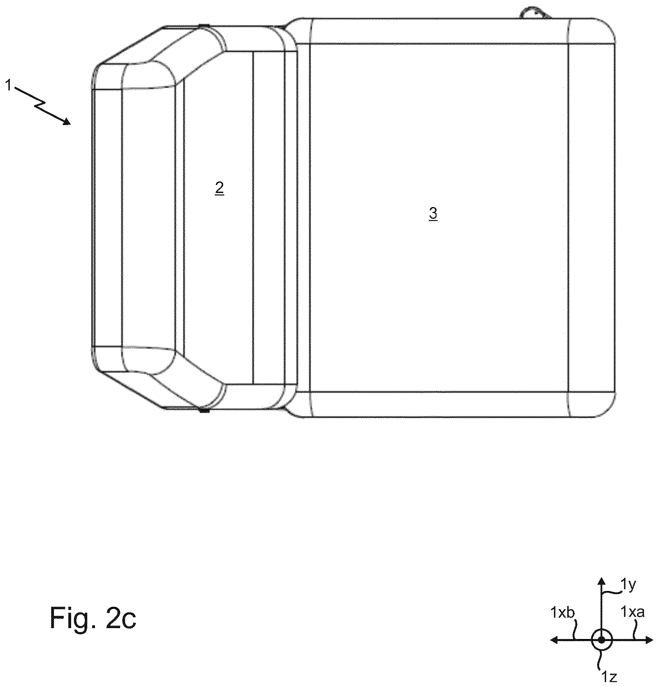

Die sechs fahrdynamischen Freiheitsgrade von Arbeitsmaschinen, im Beispiel der Figur 1 anhand eines als Traktor ausgebildeten Fahrzeugs V dargestellt, führen im Arbeitseinsatz zu Bewegungen des Fahrzeuges V, welche sich auf den Fahrer unangenehm und schädigend auswirken können. Hierzu zählen Verschiebungen 1', 3' und 5' in Richtung der Längsachse x, der Breitenachse y oder der Höhenachse z des Fahrzeugs V. Die Achsen x, y, z entsprechen vorliegend beispielsweise der Längsrichtung 1x, der Breitenrichtung 1y und der Höhenrichtung 1z des Fahrzeugsitzes 1 (siehe Darstellung ab Fig. 2).

Ebenfalls eingezeichnet sind Pfeile, welche Rotationsbewegungen 2', 4' und 6' um die Längsachse x (Rollbewegung, siehe Pfeil P1), um die Breitenachse y (Nickbewegung, siehe Pfeil P2) oder um die Höhenachse z (Gierbewegung, siehe Pfeil P3) visualisieren. Ein nickendes Fahrzeug V führt also eine Rotationsbewegung 4' um die Breitenachse y des Fahrzeugs V durch, welche beispielsweise beim Überfahren eines Hindernisses in Fahrtrichtung nach vorne entlang der Längsachse x ausgelöst wird.

Nachteil der bekannten Systeme ist jedoch, dass die Federungssysteme für die Rückenlehne und das Sitzteil oft separat arbeiten. Dadurch ist kein ganzheitlicher Schwingungsabbau möglich.

Generell gilt, dass Schwingungen dann am besten abgebaut werden, wenn die Bewegung, die beim Einleiten der Schwingung induziert wird, hinsichtlich ihrer Richtung zur Bewegungsrichtung, die der Schwingung innewohnt, genau entgegen gerichtet ausgebildet ist. Sofern die Richtung bzw. der Vektor davon abweicht, werden auch "unnötige" Bewegungsanteile induziert, deren Richtung so ausgebildet ist, dass sie zum Abbau der Schwingungen nicht beitragen können.

DE 10 2004 014 333 A1 zeigt einen Sitz, bei dem eine Neigungsbewegung der Rückenlehne mit einer Verschiebebewegung des Sitzteils über ein Verbindungselement so gekoppelt ist, dass bei einer Drehung der Rückenlehne weg vom Sitzteil das Sitzteil nach vorne geschoben wird. Die zugrundeliegende Mechanik sieht eine vertikale Führung des Rückenlehnenteils sowie dessen direkte Anbindung an das Sitzteil mittels einer Drehachse vor.

US 4 765 679 A zeigt ebenso einen Fahrzeugsitz mit aufwändigen drehmechanikschen Verbindungen zwischen dem Sitzteil und dem Rückenlehnenteil.

US 2 009 024 A zeigt eine Rückenlehne, die sich vertikal zur Sitzfläche bewegt.

Es ist daher Aufgabe vorliegender Erfindung, einen gattungsgemäßen Fahrzeugsitz so weiterzuentwickeln, dass die Schwingungen möglichst effektiv abgebaut werden und somit ein optimierter Abbau der eingeleiteten Schwingung angestrebt wird.

Die Aufgabe der Erfindung wird gelöst von einem Fahrzeugsitz mit einem Rückenlehnenteil und einem Sitzflächenteil, welche jeweils mit einem Sitzbasisteil verbunden angeordnet sind, wobei das Rückenlehnenteil gegenüber dem Sitzbasisteil verschwenkbar und federnd gelagert angeordnet ist, und wobei das Sitzflächenteil gegenüber dem Sitzbasisteil zumindest in Sitzlängsrichtung nach vorne und nach hinten verschiebbar angeordnet ist, wobei das Rückenlehnenteil und das Sitzflächenteil über eine erste Hebelanordnung derart miteinander wirkverbunden sind, dass bei einer Federungsbewegung des Rückenlehnenteils gegenüber dem Sitzbasisteil in eine Richtung weg vom Sitzflächenteil das Sitzflächenteil in Sitzlängsrichtung nach hinten verschiebbar ist.

Es sind das Rückenlehnenteil und das Sitzflächenteil über die erste Hebelanordnung weiterhin derart miteinander wirkverbunden, dass bei einer Federungsbewegung des Rückenlehnenteils gegenüber dem Sitzbasisteil in eine Richtung hin zum Sitzflächenteil das Sitzflächenteil in Sitzlängsrichtung nach vorne verschiebbar ist. Diese Beschreibungen gelten ebenso für ein oberes Ende des Rückenlehnenteils und/ oder mit Bezug auf die Sitzlängsrichtung.

Die erfindungsgemäße Ausstattung des Fahrersitzes sieht also vor, dass eine im Sitzoberteil integrierte Rückenlehnenfederung kombiniert ist mit einer synchron dazu wirkenden Längshorizontalfederung, welche ebenfalls in das Sitzoberteil integriert ist. Dabei werden im Sinne der vorliegenden Erfindung unter dem Begriff "Sitzoberteil" alle Komponenten verstanden, die oberhalb oder auf gleicher Höhe des Sitzbasisteils angeordnet sind.

Durch die Synchronisierung der Federungsbewegung werden in den Fahrzeugsitz eingeleitete Schwingungen möglichst ergonomisch weitergeleitet. Außerdem können die Schwingungen, welche in Form der Verschiebungen in Fahrzeuglängsrichtung bzw. in Sitzlängsrichtung eingeleitet werden, effektiv abgebaut werden, da eine hinsichtlich der Schwingungsrichtung entgegengerichtete Federungsbewegung induziert werden kann.

Für induzierte rotatorische Schwingungen gilt ferner, dass die Drehachse der eingeleiteten Schwingung und die Drehachse der induzierten Drehbewegung möglichst identisch sein sollten, um die Schwingungen möglichst effektiv abzubauen. Es hat sich gemäß einer vorteilhaften Variante also ferner bewährt, wenn das Rückenlehnenteil bei der Federungsbewegung gegenüber dem Sitzbasisteil um eine in Sitzbreitenrichtung verlaufende fiktive Rotationsachse verschwenkbar ist, wobei zwischen dem Rückenlehnenteil und dem Sitzbasisteil eine zweite Hebelanordnung angeordnet ist, welche mittels einer ersten Achse schwenkbar mit dem Rückenlehnenteil und mittels einer zweiten Achse schwenkbar mit dem Sitzbasisteil verbunden ist.

Im Sinne der vorliegenden Erfindung wird unter dem Begriff "fiktive Rotationsachse" oder "virtuelle Rotationsachse" eine Rotationsachse verstanden, welche nicht mittels mechanischer Elemente wie beispielsweise einer Mittelachse einer sich drehenden Welle ausgebildet ist. Es wird darunter vielmehr eine Rotationsachse verstanden, um welche ein beliebiger Punkt des verschwenkten Körpers, also beispielsweise des Rückenlehnenteils, schwenkt. Die Position einer derartigen Achse kann also auch außerhalb des verschwenkten Körpers angeordnet sein.

Vorteilhaft ist der vorliegende Fahrzeugsitz frei von einem oder mehreren Schnittpunkten zwischen der fiktiven Rotationsachse und dem Rückenlehnenteil, der ersten Hebelanordnung, der zweiten Hebelanordnung, dem Sitzflächenteil und/ oder dem Sitzbasisteil ausbildbar und/ oder ausgebildet.

Vorteilhaft ist dabei die erste Hebelanordnung bezogen auf die Sitzbreitenrichtung mittig am Fahrzeugsitz angeordnet und deren Komponenten in einfacher Zahl ausgebildet.

Die zweite Hebelanordnung ist vorteilhaft bezogen auf die Sitzbreitenrichtung zumindest teilweise beidseits und durchgehend am Fahrzeugsitz angeordnet. Beispielsweise sind das erste und das zweite Hebelelement der zweiten Hebelanordnung jeweils einmal an einer linken und einer rechten Seite des Fahrzeugsitzes angeordnet, wohingegen das dritte und das vierte Hebelelement der zweiten Hebelanordnung jeweils von der linken zur rechten Seite des Fahrzeugsitzes durchgehend ausgebildet sind. Ein Wellenelement verbindet beispielsweise die erste Achse der zweiten Hebelanordnung auf der linken Seite des Fahrzeugsitzes mit der ersten Achse der zweiten Hebelanordnung auf der rechten Seite des Fahrzeugsitzes.

Vorteilhaft ist ein in Sitzhöhenrichtung unterhalb des Sitzflächenteils angeordneter Abschnitt des Fahrzeugsitzes frei von Elementen, welche zum Rückenlehnenteil, zur ersten Hebelanordnung und/ oder zur zweiten Hebelanordnung gehören. Weiter vorteilhaft ist die erste Hebelanordnung und/ oder das Rückenlehnenteil in Sitzhöhenrichtung vollständig oberhalb des Sitzbasisteils angeordnet. Weiter vorteilhaft ist die erste Hebelanordnung und/ oder die zweite Hebelanordnung in Sitzlängsrichtung vollständig hinter dem Sitzflächenteil angeordnet.

Aus dem Stand der Technik bekannt sind bisher Ausführungsformen, die zwar eine Entlastung des Oberkörpers über Rückenfederungseinrichtungen bieten, wobei jedoch ein entsprechender rotatorischer Freiheitsgrad der Rückenlehne im Drehpunkt des Rückens bzw. der Lehnenverstelleinrichtung positioniert ist. Damit entspricht die Drehachse dieser Art Rückenfederung nicht der Rotationsachse eines nickenden Fahrzeuges.

Eine bevorzugte Ausführungsform sieht vor, dass ein erster Neigungsgrad des Rückenlehnenteils gegenüber dem Sitzflächenteil mittels einer Drehbewegung des Rückenlehnenteils um die erste Achse verstellbar ist. Eine derartige Verstellung bietet einem Fahrer die Möglichkeit, den Neigungsgrad des Rückenlehnenteils möglichst ergonomisch einzustellen.

Bevorzugt ist bei einer Bewegung des oberen Endes des Rückenlehnenteils um die erste Achse in eine Richtung weg vom Sitzflächenteil eine Position des Sitzflächenteils in Sitzlängsrichtung nach vorne verstellbar. Analog dazu ist es vorteilhaft, wenn bei einer Bewegung des oberen Endes des Rückenlehnenteils um die erste Achse in eine Richtung hin zum Sitzflächenteil eine Position des Sitzflächenteils in Sitzlängsrichtung nach hinten verstellbar ist.

Bevorzugt umfasst die zweite Hebelanordnung ein erstes Hebelelement, welches mittels der ersten Achse schwenkbar mit dem Rückenlehnenteil verbunden ist, ein zweites Hebelelement, welches mittels der zweiten Achse schwenkbar mit dem Sitzbasisteil verbunden ist, ein drittes Hebelelement, welches mittels einer dritten Achse schwenkbar mit dem ersten Hebelelement und mittels einer vierten Achse schwenkbar mit dem zweiten Hebelelement verbunden ist, und ein viertes Hebelelement, welches mittels einer fünften Achse schwenkbar mit dem ersten Hebelelement und mittels einer sechsten Achse schwenkbar mit dem zweiten Hebelelement verbunden ist, wobei ein Abstand zwischen der ersten Achse und der dritten Achse veränderbar ist, so dass eine Position der fiktiven Rotationsachse in Sitzhöhenrichtung verstellbar ist. Diese zweite Hebelanordnung kann auch als Viergelenk bezeichnet werden.

Beispielsweise sind das zweite, das dritte und/ oder das vierte Hebelelement zumindest in einer Verbindungsrichtung zwischen den sie lagernden Achsen linear verlaufend ausgebildet. Beispielsweise ist das erste Hebelelement T-förmig ausgebildet.

Beispielsweise ist die dritte Achse, welche beispielsweise mittels einer Mittelachse eines Stifts ausgebildet ist, innerhalb eines am ersten Hebelelement der zweiten Hebelanordnung angeordneten Langlochs verschiebbar gelagert. Nach erfolgter Verschiebung der dritten Achse kann bevorzugt die Position des dazugehörigen dritten Hebelelements gegenüber dem ersten Hebelelement hinsichtlich einer Verschiebebewegung arretiert werden. Besonders bevorzugt ist das dritte Hebelelement auch nach dieser Arretierung zum ersten Hebelelement drehbar gelagert. Die Ausbildung des Langlochs und die Verschiebung der dritten Achse innerhalb des Langlochs ist ein Beispiel dafür, wie der Abstand zwischen der ersten Achse und der dritten Achse veränderbar ausgebildet sein kann.

Der vorliegende Fahrzeugsitz kann so ausgebildet sein, dass durch eine Verschiebung der dritten Achse innerhalb des Langlochs des ersten Hebelelements das dritte und das vierte Hebelelement der zweiten Hebelanordnung parallel zueinander anordenbar sind. In diesem Fall ist die Position der fiktiven Rotationsachse theoretisch unendlich weit in Sitzhöhenrichtung nach unten verschoben, so dass das Rückenlehnenteil bei einer Federungsbewegung um die fiktive Rotationsachse auf einem Kreisbogen mit unendlich großem Durchmesser verschwenkt, was näherungsweise einer Parallelverschiebung des Rückenlehnenteils in Sitzlängsrichtung entspricht.

Durch die vorteilhafte Weiterbildung des erfindungsgemäßen Fahrzeugsitzes kann also die vertikale Position der Drehachse, um die die Rückenlehne während der Federung schwingt, auf die vertikale Position der Nickachse des Fahrzeugs eingestellt werden. Durch die kinematische Verbindung und die in Fahrzeugsitzlängsrichtung bewegliche Sitzplatte stellt das gesamte System eine Längsfederung dar, welche den oben beschriebenen entsprechenden Freiheitsgraden und den daraus entstehenden typischen Fahrzeuglängs- und Nickbewegungen für den Fahrzeugführer schwingungsisolierend entgegenwirkt.

Gemäß einer weiteren bevorzugten Ausführungsform ist es vorgesehen, dass ein zweiter Neigungsgrad zwischen dem zweiten Hebelelement der zweiten Hebelanordnung und dem Sitzbasisteil veränderbar ist, wodurch die Position der fiktiven Rotationsachse in Sitzlängsrichtung verstellbar ist. Dies erfolgt bevorzugt mittels einer Drehung der zweiten Hebelanordnung um die zweite Achse der zweiten Hebelanordnung, welche wie oben beschrieben schwenkbar mit dem Sitzbasisteil verbunden ist.

Es kann dabei bevorzugt die fiktive Rotationsachse eine Position einnehmen, die auf beiden Seiten einer Ebene, welche durch die zweite Achse und parallel zur Sitzhöhenrichtung verlaufend angeordnet ist, oder in dieser Ebene selbst liegen kann.

Ein derartiges System mit einer integrierten Rückenfederung und einer synchronisierten Horizontalfederung kann beispielsweise als RBS+ bezeichnet werden, wobei R für "rotation" (Rotation), B für "backrest" (Rückenlehne), S für "suspension" (Federung) und + für "synchronized horizontal suspension" ("synchronisierte Horizontalfederung") stehen.

Das RBS+ bietet somit die Möglichkeit, die Position der Rotationsachse in Sitzhöhenrichtung und Sitzlängsrichtung so einzustellen, dass diese mit der Position der Fahrzeugnickachse identisch bzw. angenähert ist, was aus dem Stand der Technik nicht bekannt ist. Dies bietet einen wesentlichen Vorteil, da sich die Nickachse des Fahrzeuges je nach Belastungs- und Anwendungsfall ändern kann und die resultierenden Schwingungen mittels einer optimalen Einstellung der Rotationsachse der fiktiven Rotationsachse des Rückenlehnenteils bestmöglich abgebaut werden können.

Zugleich kann dieses System in Kombination mit der beweglichen Sitzplatte, welche mechanisch mit der Bewegung des Rückenlehnenteils verbunden ist, als neuartige Längshorizontalfederung, integriert in das Sitzoberteil, wirken.

Dabei kann eine Arretierung zwischen der zweiten Hebelanordnung und dem Sitzbasisteil nach erfolgter Verstellung der Rotationsachse in Sitzhöhen- und/ oder Sitzlängsrichtung beispielsweise über eine Motorkraft eines entsprechend angeordneten Verstellmotors oder über die Reibkraft einer entsprechend angeordneten Spindel erfolgen. Weitere Möglichkeiten sind denkbar, werden aber im Rahmen der vorliegenden Erfindung nicht weiter ausgeführt.

Ferner ist es denkbar, dass die beschriebenen Einrichtungen (Rückenlehnenfederung, Kopplung der Rückenlehnenfederung mit der Horizontalfederung und das gesamte Schwingungssystem) einzeln oder alle jeweils zu- und abschaltbar ausgebildet sind. Denkbar ist hier beispielsweise, dass das Abschalten über das Unterbrechen einer mechanischen Verbindung, wie beispielsweise der ersten und/ oder zweiten Hebelanordnung, zwischen Rückenlehne und Sitzflächenteil bzw. zwischen Rückenlehne und Sitzbasisteil erfolgt.

Um die beschriebene Synchronisation zwischen dem Rückenlehnenteil und dem Sitzflächenteil zu realisieren, ist es denkbar, dass die erste Hebelanordnung ein starr mit der ersten Achse verbundenes erstes Hebelelement und ein damit schwenkbar verbundenes zweites Hebelelement umfasst, welches wiederum schwenkbar mit dem Sitzflächenteil verbunden ist. Beispielsweise kann das zweite Hebelelement der ersten Hebelanordnung schwenkbar mit einem dritten Hebelelement der ersten Hebelanordnung verbunden sein, welches wiederum starr mit dem Sitzflächenteil verbunden ist.

Vorteilhaft weisen die erste und die zweite Hebelanordnung mittels der ersten Achse nur ein gemeinsames Element auf. Denkbar ist, dass das erste Hebelelement der ersten Hebelanordnung mittels eines Wellenelements, dessen Mittelachse mittels der ersten Achse des ersten Hebelelements der zweiten Hebelanordnung ausgebildet ist, starr verbunden angeordnet ist.

Eine derartige Anordnung ermöglicht es, eine als Rotationsbewegung ausgebildete Federungsbewegung des Rückenlehnenteils in eine als Translationsbewegung ausgebildete Federungsbewegung des Sitzflächenteils zu übertragen. Mit anderen Worten ist es somit möglich, eine rotatorische Federung des Rückenlehnenteils um die Nickachse des Fahrzeugs, welche beispielsweise der Sitzbreitenrichtung entspricht, mit einer translatorischen Horizontalfederung des Sitzflächenteils entlang der Längsachse des Fahrzeugs, welche beispielsweise der Sitzlängsrichtung entspricht, zu koppeln.

Bevorzugt ist es, wenn eine Verstellung der Position der fiktiven Rotationsachse manuell oder mittels eines elektrischen oder pneumatischen Antriebselements, insbesondere automatisch, erfolgt.

Die Federung des Rückenlehnenteils bei Einleiten von Schwingungen erfolgt also wie oben erwähnt vorteilhaft mittels einer ersten Drehbewegung des Rückenlehnenteils um die fiktive Rotationsachse. Ferner erfolgt eine Einstellung des Neigungsgrades des Rückenlehnenteils vorteilhaft mittels einer zweiten Drehbewegung des Rückenlehnenteils um die erste Achse. Die erste und die zweite Drehbewegung des Rückenlehnenteils sind wie beschrieben vorteilhaft in zwei unterschiedlich gerichtete, bevorzugt in zwei entgegengesetzt gerichtete Translationsbewegungen des Sitzflächenteils übertragbar.

Bevorzugt sind an der rotatorischen Federungsbewegung des Rückenlehnenteils lediglich das Rückenlehnenteil, die zweite Hebelanordnung sowie das erste Hebelelement der ersten Hebelanordnung beteiligt.

Besonders bevorzugt weicht die Position der fiktiven Rotationsachse über den gesamten Verstellbereich der zweiten Hebelanordnung in Höhen- und/ oder in Längsrichtung von der Position der ersten Achse ab. Weiterhin ist bevorzugt, dass die fiktive Rotationsachse in Höhenrichtung bevorzugt unterhalb der zweiten Achse angeordnet ist.

Die mittels der Verstellung des Neigungsgrades des Rückenlehnenteils abbildbare Mechanik wird im Sinne der vorliegenden Erfindung auch als Synchro-Mechanik bezeichnet. Diese Verbindung zwischen dem Sitzflächenteil und dem Rückenlehnenteil stellt in dieser Form der Anwendung im Fahrzeugbereich ebenfalls eine Neuheit dar. Hierbei wird wie beschrieben beim Neigen des Rückenlehnenteils synchron dazu das Sitzflächenteil bewegt. Eine Verstellung der Neigung des Rückenlehnenteils nach hinten bewirkt ein Vorschieben des Sitzflächenteils, wohingegen beim Senkrechtstellen des Rückenlehnenteils gemäß einer Verstellung der Neigung des Rückenlehnenteils nach vorne das Sitzflächenteil nach hinten gezogen wird.

Besonders bevorzugt ist die Verstellung des Neigungsgrades des Rückenlehnenteils innerhalb vordefinierbarer Grenzen möglich; bevorzugt erfolgt eine Begrenzung der Verstellung durch eine mittels der zweiten Hebelanordnung und des Rückenlehnenteils ausgebildeten Mechanik. So ist es denkbar, dass ein an der zweiten Hebelanordnung, bevorzugt am ersten Hebelelement der zweiten Hebelanordnung angeordneter Stift in einem bevorzugt bogenförmig ausgebildeten Langloch, welches am Rückenlehnenteil ausgebildet ist, führbar ist. Eine Verstellung über das Ende des Bogens, an welchem entlang das Langloch ausgebildet ist, ist somit nicht möglich. Vorteilhaft ist der Stift in Sitzhöhenrichtung stets oberhalb der ersten Achse der zweiten Hebelanordnung angeordnet.

Weitere Vorteile, Ziele und Eigenschaften vorliegender Erfindung werden anhand anliegender Zeichnung und nachfolgender Beschreibung erläutert, in welchen beispielhaft eine Ausführungsform des erfindungsgemäßen Fahrzeugsitzes dargestellt und beschrieben ist. In der Zeichnung zeigen:
- Figur 1: Übersicht der Freiheitsgrade von Arbeitsmaschinen;
- Figuren 2a, b, c: schematisch mehrere Ansichten eines erfindungsgemäßen Fahrzeugsitzes zum Einbau in ein Fahrzeug gemäß der Figur 1;
- Figuren 3a, b, c: schematisch eine Darstellung der wesentlichen Komponenten des erfindungsgemäßen Fahrzeugsitzes und der fiktiven Rotationsachse in verschiedenen Federungszuständen;
- Figuren 4a, b, c: eine weitere Darstellung der verschiedenen Federungszustände des erfindungsgemäßen Fahrzeugsitzes;
- Figur 4d: eine überlagerte Darstellung der verschiedenen Federungszustände des erfindungsgemäßen Fahrzeugsitzes gemäß den Figuren 4a bis c;
- Figuren 5a, b, c: eine schematische Darstellung der verschiedenen Federungszustände des erfindungsgemäßen Fahrzeugsitzes mit zweiter Hebelanordnung;
- Figuren 6a, b, c: verschiedene Einstellmöglichkeiten der zweiten Hebelanordnung zur Verstellung der Höhenposition der fiktiven Rotationsachse;
- Figuren 7a, b, c: verschiedene Neigungsgrade der zweiten Hebelanordnung zur Verstellung der Längsposition der fiktiven Rotationsachse;
- Figur 8: Detail der Fig. 7b; und
- Figuren 9a, b, c: verschiedene Neigungsgrade des Rückenlehnenteils.

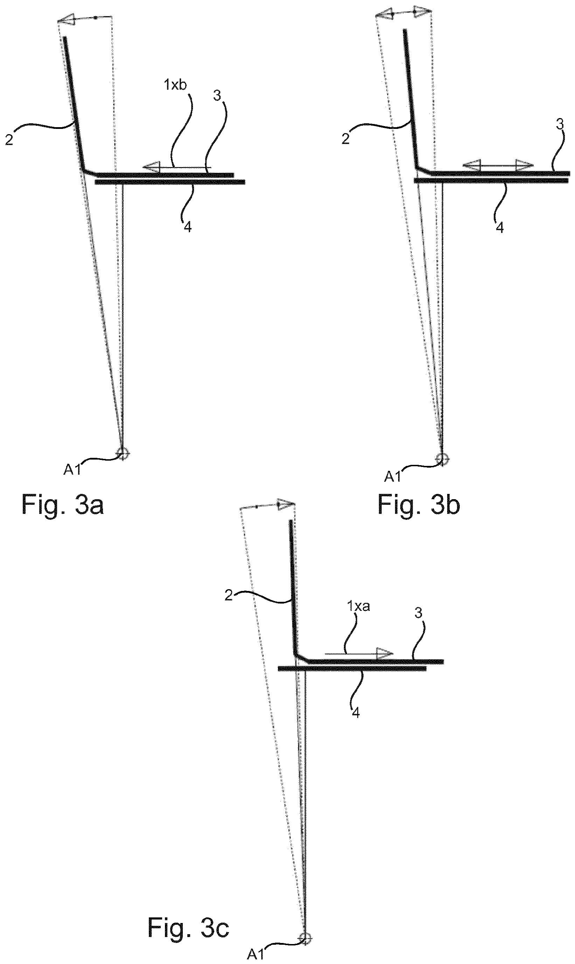

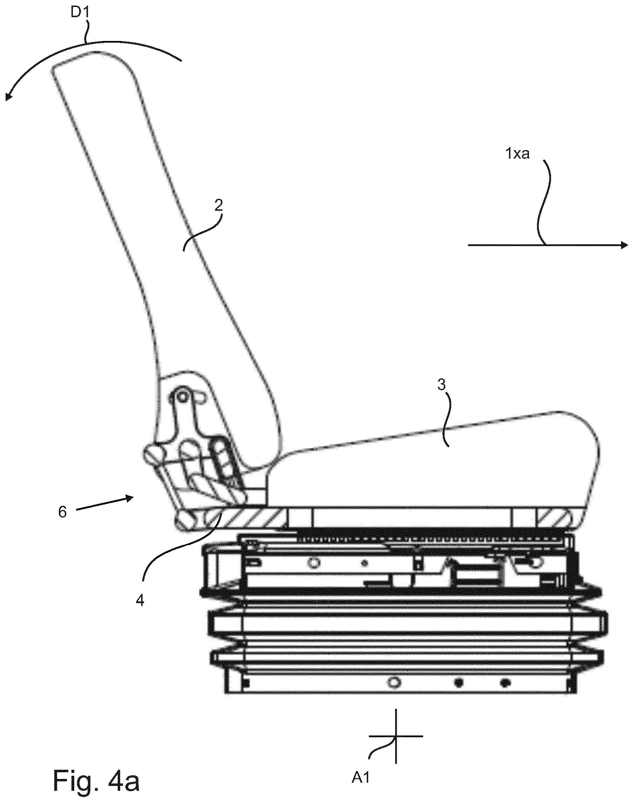

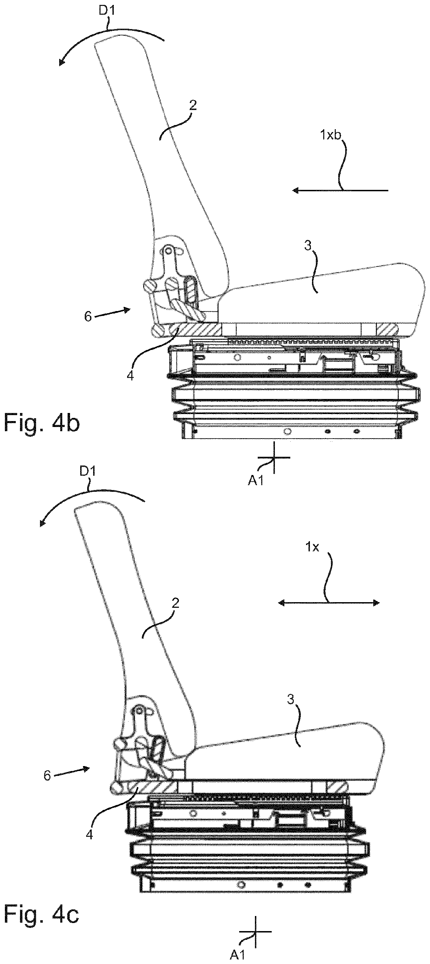

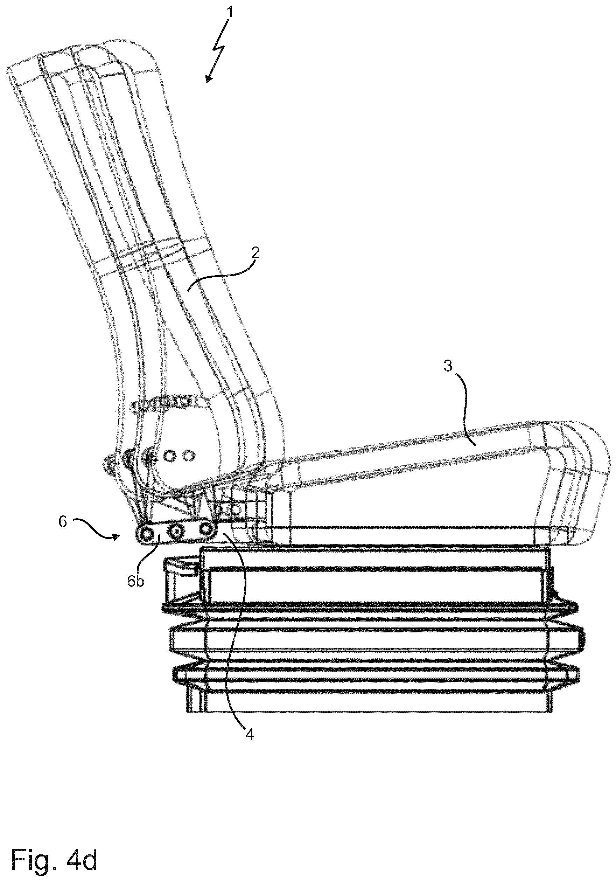

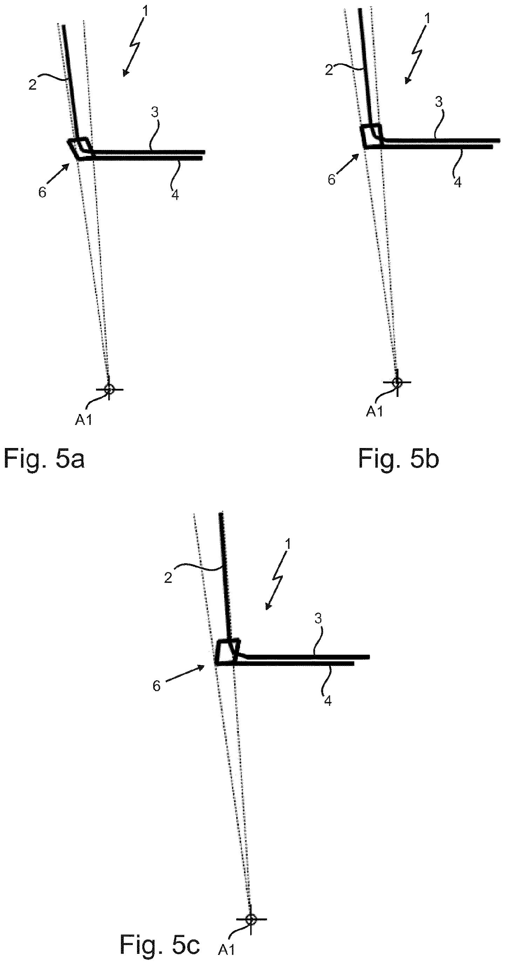

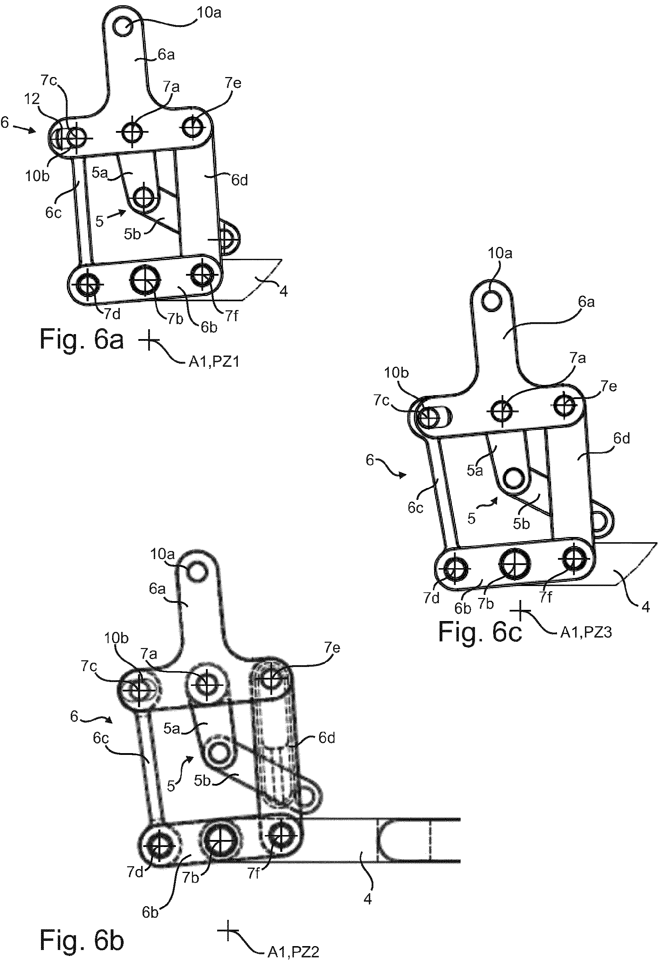

Vorab sei darauf hingewiesen, dass in den Figuren aus Gründen der Übersichtlichkeit zum Teil Komponenten vereinfacht oder abgeändert dargestellt sind. Beispielsweise ist die Position der fiktiven Rotationsachse A1 gemäß den Figuren 4a bis 4c, 6a bis 6c und 8 jeweils nur beispielhaft und insbesondere gegenüber der tatsächlichen Position in Sitzhöhenrichtung 1z nach oben versetzt dargestellt. Insbesondere die erste 5 und die zweite Hebelanordnung 6 sind jeweils gemäß der Figur 6b mit verdeckten Kanten und gemäß den Figuren 4a bis 4c anhand einer partiellen Querschnittsdarstellung veranschaulicht. Ferner illustrieren die Figuren 3a bis 3c und 5a bis 5c die wesentlichen Komponenten des gezeigten Fahrzeugsitzes 1 rein schematisch.

Der in den Figuren 2a bis 2c gezeigte Fahrzeugsitz 1 ist gezeigt mit einem Rückenlehnenteil 2 und einem Sitzflächenteil 3, welche jeweils mit einem Sitzbasisteil 4 verbunden angeordnet sind, wobei das Rückenlehnenteil 2 gegenüber dem Sitzbasisteil 4 verschwenkbar und federnd gelagert angeordnet ist, und wobei das Sitzflächenteil 3 gegenüber dem Sitzbasisteil 4 zumindest in Sitzlängsrichtung 1x nach vorne 1xa und nach hinten 1xb verschiebbar angeordnet ist.

Die Figuren 3a-3c, 4a-4d und 5a-5c zeigten, dass das Rückenlehnenteil 2 und das Sitzflächenteil 3 über eine erste Hebelanordnung 5 derart miteinander wirkverbunden sind, dass bei einer Federungsbewegung des Rückenlehnenteils 2 gegenüber dem Sitzbasisteil 4 in eine Richtung weg vom Sitzflächenteil 3 das Sitzflächenteil 3 in Sitzlängsrichtung 1x nach hinten 1xb verschiebbar ist. Ebenfalls sind vorliegend das Rückenlehnenteil 2 und das Sitzflächenteil 3 über die erste Hebelanordnung 5 weiterhin derart miteinander wirkverbunden, dass bei einer Federungsbewegung des Rückenlehnenteils 2 gegenüber dem Sitzbasisteil 4 in eine Richtung hin zum Sitzflächenteil 3 das Sitzflächenteil 3 in Sitzlängsrichtung 1x nach vorne 1xa verschiebbar ist.

Vorliegend ist dabei die erste Hebelanordnung 5 bezogen auf die Sitzbreitenrichtung 1y mittig am Fahrzeugsitz 1 angeordnet. Die zweite Hebelanordnung 6 ist bezogen auf die Sitzbreitenrichtung 1y beidseits und durchgehend am Fahrzeugsitz 1 angeordnet. Vorliegend sind das erste 6a und das zweite Hebelelement 6b jeweils einmal an einer linken I und einer rechten Seite r des Fahrzeugsitzes 1 angeordnet, wohingegen das dritte 6c und das vierte Hebelelement 6d jeweils von der linken I zur rechten Seite r durchgehend ausgebildet sind. Ein Wellenelement 8 verbindet die erste Achse 7a der linken Seite I mit der ersten Achse 7a der rechten Seite r.

Gemäß den Figuren 3a-c ist das Rückenlehnenteil 2 außerdem bei der Federungsbewegung D1 gegenüber dem Sitzbasisteil 4 um eine in Sitzbreitenrichtung 1y verlaufende fiktive Rotationsachse A1 verschwenkbar.

Die Figuren 4a-c und 6a-6c zeigen eine zwischen dem Rückenlehnenteil 2 und dem Sitzbasisteil 4 angeordnete zweite Hebelanordnung 6, welche mittels einer ersten Achse 7a schwenkbar mit dem Rückenlehnenteil 2 und mittels einer zweiten Achse 7b schwenkbar mit dem Sitzbasisteil 4 verbunden ist.

Dabei ist die fiktive Rotationsachse A1 nicht mittels mechanischer Elemente ausgebildet, sondern stellt eine Achse dar, um welche ein beliebiger Punkt des verschwenkten Körpers, also beispielsweise des Rückenlehnenteils 2, schwenkt. Die Position der fiktiven Rotationsachse A1 ist also vorliegend außerhalb des Rückenlehnenteils 2 angeordnet. Vorliegend ist der vorliegende Fahrzeugsitz 1 frei von einem oder mehreren Schnittpunkten zwischen der fiktiven Rotationsachse A1 und dem Rückenlehnenteil 2, der ersten Hebelanordnung 5, der zweiten Hebelanordnung 6, dem Sitzflächenteil 3 und dem Sitzbasisteil 4 ausbildbar und ausgebildet.

Gemäß den Figuren 3a, 4a und 5a ist das Rückenlehnenteil 2 um die fiktive Rotationsachse A1, welche vorliegend auf eine in Sitzhöhenrichtung 1z und Sitzlängsrichtung 1x feste Position eingestellt ist, maximal nach hinten 1xb ausgefedert; das Sitzflächenteil 3 ist ebenfalls in seiner hintersten Position. Analog dazu ist gemäß den Figuren 3c, 4c und 5c das Rückenlehnenteil 2 um die fiktive Rotationsachse A1 maximal nach vorne 1xa ausgefedert; das Sitzflächenteil 3 ist ebenfalls in seiner vordersten Position. Die Figuren 3b, 4b, 5b zeigen jeweils eine Position des Rückenlehnenteils 2 zwischen dessen Maximalpositionen gemäß den Figuren 3a, 4a und 5a sowie den Figuren 3c, 4c und 5c.

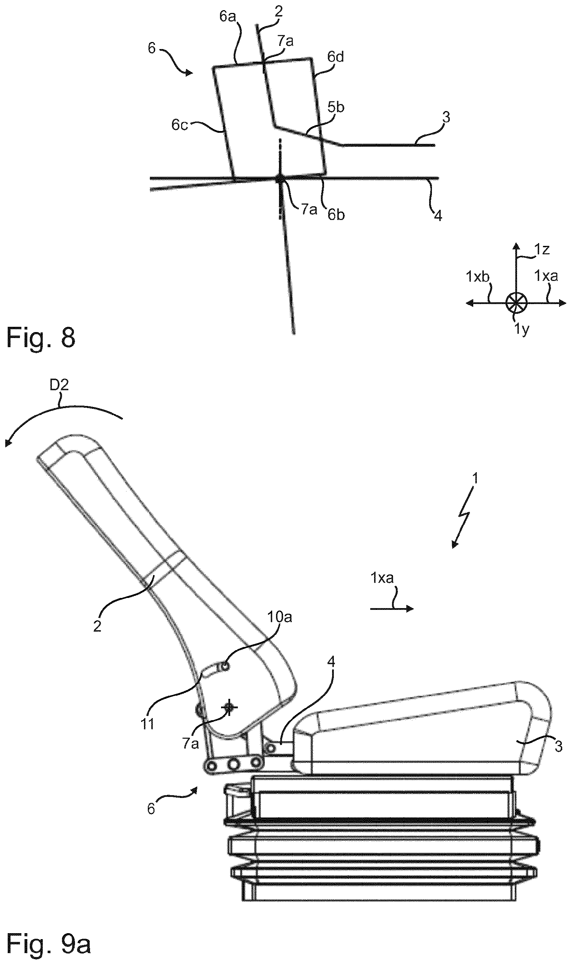

Den Figuren 9a bis 9c ist zu entnehmen, dass ein erster Neigungsgrad w1 des Rückenlehnenteils 2 gegenüber dem Sitzflächenteil 3 mittels einer zweiten Drehbewegung D2 des Rückenlehnenteils 2 um die erste Achse 7a verstellbar ist. Eine derartige Verstellung bietet einem Fahrer die Möglichkeit, den Neigungsgrad w1 des Rückenlehnenteils 2 möglichst ergonomisch einzustellen.

Vorliegend ist bei einer Bewegung des Rückenlehnenteils 2 um die erste Achse 7a in eine Richtung weg vom Sitzflächenteil 3 eine Position des Sitzflächenteils 3 in Sitzlängsrichtung 1x nach vorne 1xa verstellbar. Analog dazu ist bei einer Bewegung des Rückenlehnenteils 2 um die erste Achse 7a in eine Richtung hin zum Sitzflächenteil 3 eine Position des Sitzflächenteils 3 in Sitzlängsrichtung 1x nach hinten 1xb verstellbar.

Wie insbesondere den Figuren 6a-6c zu entnehmen ist, umfasst die zweite Hebelanordnung 6 ein erstes Hebelelement 6a, welches mittels der ersten Achse 7a schwenkbar mit dem Rückenlehnenteil 2 verbunden ist, ein zweites Hebelelement 6b, welches mittels der zweiten Achse 7b schwenkbar mit dem Sitzbasisteil 4 verbunden ist, ein drittes Hebelelement 6c, welches mittels einer dritten Achse 7c schwenkbar mit dem ersten Hebelelement 6a und mittels einer vierten Achse 7d schwenkbar mit dem zweiten Hebelelement 6b verbunden ist, und ein viertes Hebelelement 6d, welches mittels einer fünften Achse 7e schwenkbar mit dem ersten Hebelelement 6a und mittels einer sechsten Achse 7f schwenkbar mit dem zweiten Hebelelement 6b verbunden ist, wobei ein Abstand zwischen der ersten Achse 7a und der dritten Achse 7c veränderbar ist, so dass eine Position der fiktiven Rotationsachse A1 in Sitzhöhenrichtung 1z verstellbar ist. Diese zweite Hebelanordnung 6 wird als Viergelenk bezeichnet.

Vorliegend ist die dritte Achse 7c, welche mittels einer Mittelachse eines zweiten Stifts 10b ausgebildet ist, innerhalb eines am ersten Hebelelement der zweiten Hebelanordnung 6 angeordneten Langlochs 12 verschiebbar gelagert. Somit ist der Abstand zwischen der ersten Achse 7a und der dritten Achse 7c veränderbar ausgebildet. Arretierungselemente, mittels welcher nach erfolgter Verschiebung der dritten Achse 7c die Position des dazugehörigen dritten Hebelelements 6c gegenüber dem ersten Hebelelement 6a hinsichtlich einer Verschiebebewegung arretiert werden kann, sind vorliegend angeordnet, aber nicht gezeigt. Es ist das dritte Hebelelement 6c auch nach dieser Arretierung zum ersten Hebelelement 6a drehbar gelagert.

Eine Erläuterung dafür, inwiefern eine Verschiebung der dritten Achse 7c innerhalb des Langlochs 12 eine Positionsänderung der fiktiven Rotationsachse A1 in Höhenrichtung 1z bewirkt, kann erfolgen, indem zumindest näherungsweise angenommen wird, dass die erste 7a und die dritte Achse 7c der zweiten Hebelanordnung 6 auf einem gemeinsamen Kreisbogen um die fiktive Rotationsachse A1 verschwenken, wobei zwischen den Achsen 7a, 7c eine Sehne dieses Kreisbogens ausgebildet ist. Je größer der Abstand zwischen den Achsen 7a und 7c ist, desto näher muss die Sehne am Kreismittelpunkt, welcher in diesem Fall auf der fiktiven Rotationsachse A1 liegt, liegen, und desto kleiner muss der Radius des Kreisbogens, auf dem die Achsen 7a, 7c verschwenken, sein. Wenn der Abstand zwischen den Achsen 7a und 7c verkleinert wird, ändert sich also auch der Abstand zwischen der Sehne des Kreisbogens und der fiktiven Rotationsachse A1. Vorliegend kann die Position und/ oder die Länge der Sehne nicht an die Position der fiktiven Rotationsachse A1 angepasst werden, da die Achsen 7a, 7c ortsfest ausgebildet sind; demnach muss die Position der fiktiven Rotationsachse A1 an die Position und/ oder Länge der Sehne angepasst werden und verschiebt sich dann also in Sitzhöhenrichtung 1z nach oben oder nach unten.

Dabei zeigt die Figur 6a, dass die dritte Achse 7c innerhalb des Langlochs 12 bezogen auf die Sitzlängsrichtung 1x an der vordersten Position angeordnet ist. Entsprechend verschiebt sich die Position der fiktiven Rotationsachse A1 auf eine in Bezug auf die Sitzhöhenrichtung 1z unterste Position PZ1. Analog dazu zeigt die Figur 6c, dass die dritte Achse 7c innerhalb des Langlochs 12 bezogen auf die Sitzlängsrichtung 1x an der hintersten Position angeordnet ist. Entsprechend verschiebt sich die Position der fiktiven Rotationsachse A1 auf eine in Bezug auf die Sitzhöhenrichtung 1z oberste Position PZ3. Die Figur 6b zeigt eine in Bezug auf die Sitzhöhenrichtung 1z mittlere Position PZ2 der fiktiven Rotationsachse A1.

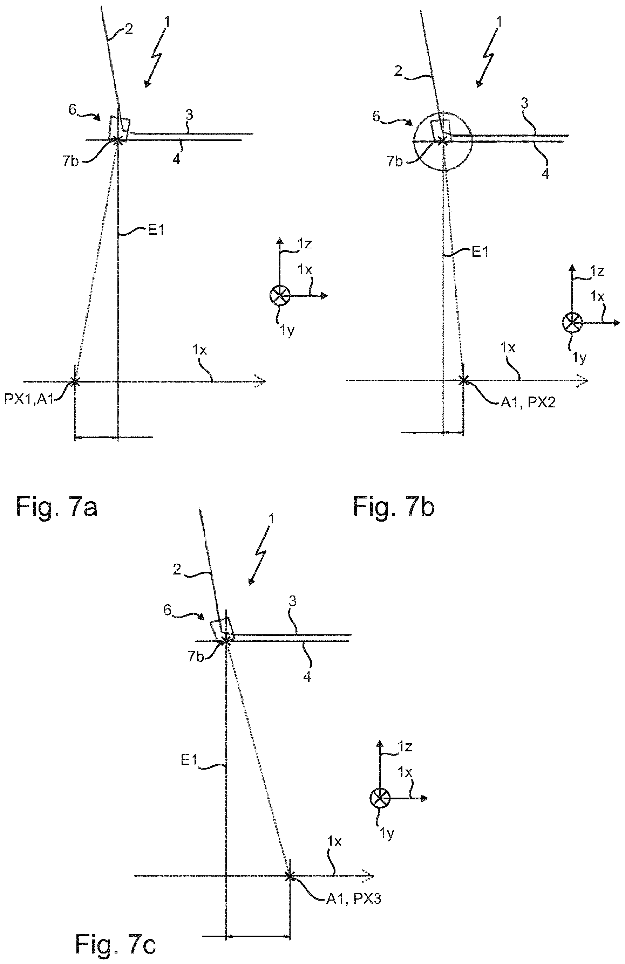

Aus den Figuren 6a bis 6c und den Figuren 7a bis 7c geht ebenfalls hervor, dass ein zweiter Neigungsgrad w2 zwischen dem zweiten Hebelelement 6b der zweiten Hebelanordnung 6 und dem Sitzbasisteil 4 veränderbar ist, wodurch die Position der fiktiven Rotationsachse A1 in Sitzlängsrichtung 1x verstellbar ist. Dies erfolgt vorliegend mittels einer Drehung der zweiten Hebelanordnung 6 um die zweite Achse 7b der zweiten Hebelanordnung 6, welche wie oben beschrieben schwenkbar mit dem Sitzbasisteil 4 verbunden ist.

Die Figuren 7a bis 7c zeigen dabei verschieden eingestellte Neigungsgrade w2 der zweiten Hebelanordnung 6 und damit verbunden unterschiedliche Positionen PX1, PX2, PX3 der fiktiven Rotationsachse A1 in Bezug auf die Sitzlängsachse 1x. Wie gezeigt, kann dabei die fiktive Rotationsachse A1 eine Position PX1, PX2, PX3 einnehmen, die auf beiden Seiten einer Ebene E1, welche durch die zweite Achse 7b und parallel zur Sitzhöhenrichtung 1z verlaufend angeordnet ist, oder in der Ebene E1 selbst liegen kann.

Dabei zeigt die Figur 7a eine Extremposition, gemäß welcher die Position PX1 der fiktiven Rotationsachse A1 in Bezug auf die Sitzlängsachse 1x maximal nach hinten 1xb versetzt eingestellt ist. Analog dazu zeigt die Figur 7c eine Extremposition, gemäß welcher die Position PX3 der fiktiven Rotationsachse A1 in Bezug auf die Sitzlängsachse 1x maximal nach vorne 1xb versetzt eingestellt ist. Die Figur 7b zeigt eine Position PX2 der fiktiven Rotationsachse A1 zwischen den beiden Extrempositionen gemäß den Figuren 7a und 7c, welche insbesondere der Darstellung gemäß der Fig. 8 entspricht.

Die vergrößerte, schematische Darstellung gemäß der Figur 8 zeigt nochmals die zweite Hebelanordnung 6 mit Hebeln 6a, 6b, 6c, 6d, welche um die zweite Achse 7b drehbar angeordnet ist. Ebenfalls gezeigt sind das Rückenlehnenteil 2, das Sitzflächenteil 3 sowie das Sitzbasisteil 4. Vorliegend entspricht die Darstellung gemäß der Figur 8 einer Grundstellung des Neigungsgrades w2 der zweiten Hebelanordnung 6, gemäß welcher diese um 5° nach hinten 1xb verschwenkt ist. Insbesondere ist das zweite Hebelelement 6b in der gezeigten Darstellung gegenüber einer Achse in Sitzlängsrichtung 1x um 5° gegen den Uhrzeigersinn verschwenkt; dies gilt bei einer Darstellung wie gemäß Fig. 8 mit Blick von außerhalb des Fahrzeugsitzes 1 auf die in Sitzbreitenrichtung 1y rechte Seite r des Fahrzeugsitzes 1. Analog dazu gilt bei einer nicht gezeigten Darstellung mit Blick von außerhalb des Fahrzeugsitzes 1 auf die in Sitzbreitenrichtung 1y linke Seite I des Fahrzeugsitzes 1, dass das zweite Hebelelement 6b in der Grundstellung gegenüber einer Achse in Sitzlängsrichtung 1x um 5° im Uhrzeigersinn verschwenkt angeordnet ist.

Der gezeigte Fahrzeugsitz 1 bildet also ein System mit einer integrierten Rückenfederung und einer synchronisierten Horizontalfederung ab, welches wie oben erläutert als RBS+ bezeichnet werden kann und die Möglichkeit bietet, die Position der Rotationsachse A1 in Sitzhöhenrichtung 1z und Sitzlängsrichtung 1x so einzustellen, dass diese mit der Position der Fahrzeugnickachse identisch bzw. angenähert ist. Zugleich bildet der gezeigte Fahrzeugsitz 1 ein System ab, welches in Kombination mit dem beweglichen Sitzflächenteil 3, welches mechanisch mit der Bewegung des Rückenlehnenteils 2 verbunden ist, als neuartige Längshorizontalfederung, integriert in das Sitzoberteil 2, 3, 4 wirken kann.

Nicht gezeigt ist in den Figuren eine Arretiereinrichtung, mittels welcher eine Arretierung zwischen der zweiten Hebelanordnung 6 und dem Sitzbasisteil 4 nach erfolgter Verstellung der Rotationsachse A1 in Sitzhöhen- 1z und/ oder Sitzlängsrichtung 1x erfolgt.

Aus den Figuren 7a bis 7c geht insbesondere auch hervor, dass die erste Hebelanordnung 5 ein starr mit der ersten Achse 7a verbundenes erstes Hebelelement 5a und ein damit schwenkbar verbundenes zweites Hebelelement 5b umfasst, welches wiederum schwenkbar mit dem Sitzflächenteil 3 verbunden ist. Vorliegend ist das zweite Hebelelement 5b schwenkbar mit einem dritten Hebelelement 5c der ersten Hebelanordnung 5 verbunden, welches wiederum starr mit dem Sitzflächenteil 3 verbunden ist.

Eine derartige Anordnung ermöglicht es, eine als Rotationsbewegung ausgebildete Federungsbewegung des Rückenlehnenteils 2 in eine als Translationsbewegung ausgebildete Federungsbewegung des Sitzflächenteils 3 zu übertragen. Somit ist es möglich, eine rotatorische Federung des Rückenlehnenteils 2 um die Nickachse y des Fahrzeugs V, welche vorliegend der Sitzbreitenrichtung 1y entspricht, mit einer translatorischen Horizontalfederung des Sitzflächenteils 3 entlang der Längsachse x des Fahrzeugs V, welche vorliegend der Sitzlängsrichtung 1x entspricht, zu koppeln.

Die Position der fiktiven Rotationsachse A1 kann vorliegend mittels eines nicht gezeigten elektrischen Antriebselements automatisch erfolgen.

Die Federung des Rückenlehnenteils 2 bei Einleiten von Schwingungen erfolgt also wie gemäß den Figuren 7a bis 7c gezeigt mittels einer ersten Drehbewegung D1 des Rückenlehnenteils 2 um die fiktive Rotationsachse A1. Ferner erfolgt eine Einstellung des ersten Neigungsgrades w1 des Rückenlehnenteils 2 mittels einer zweiten Drehbewegung D2 des Rückenlehnenteils 2 um die erste Achse 7a der zweiten Hebelanordnung 6, wie zu sehen gemäß den Figuren 9a bis 9c. Zu sehen ist, dass die erste Drehbewegung und die zweite Drehbewegung des Rückenlehnenteils 2 in zwei entgegengesetzt gerichtete Translationsbewegungen des Sitzflächenteils 3 nach vorne 1xa und nach hinten 1xb übertragbar sind.

Vorliegend weicht die Position der fiktiven Rotationsachse A1 über den gesamten Verstellbereich der zweiten Hebelanordnung 6 in Höhen- 1z und in Längsrichtung 1x von der Position der ersten Achse 7a ab. Weiterhin ist vorliegend die fiktive Rotationsachse A1 in Höhenrichtung 1z stets unterhalb der zweiten Achse 7b angeordnet.

Die mittels der Figuren 9a bis 9c gezeigte Synchro-Mechanik bildet also ein System ab, mittels welchem eine Verstellung der Neigung des Rückenlehnenteils 2 nach hinten ein Vorschieben des Sitzflächenteils 3 in Richtung 1xa bewirkt, wohingegen beim Senkrechtstellen des Rückenlehnenteils 2 gemäß einer Verstellung der Neigung des Rückenlehnenteils 2 nach vorne das Sitzflächenteil 3 nach hinten 1xb gezogen wird.

Vorliegend ist die Verstellung des Neigungsgrades w1 des Rückenlehnenteils 2 innerhalb vordefinierbarer Grenzen möglich, da ein am ersten Hebelelement 5a der zweiten Hebelanordnung 5 angeordneter Stift 10 in einem bogenförmig ausgebildeten Langloch 11, welches am Rückenlehnenteil 2 ausgebildet ist, führbar ist. Eine Verstellung über das Ende des Bogens, an welchem entlang das Langloch 11 ausgebildet ist, ist somit nicht möglich.

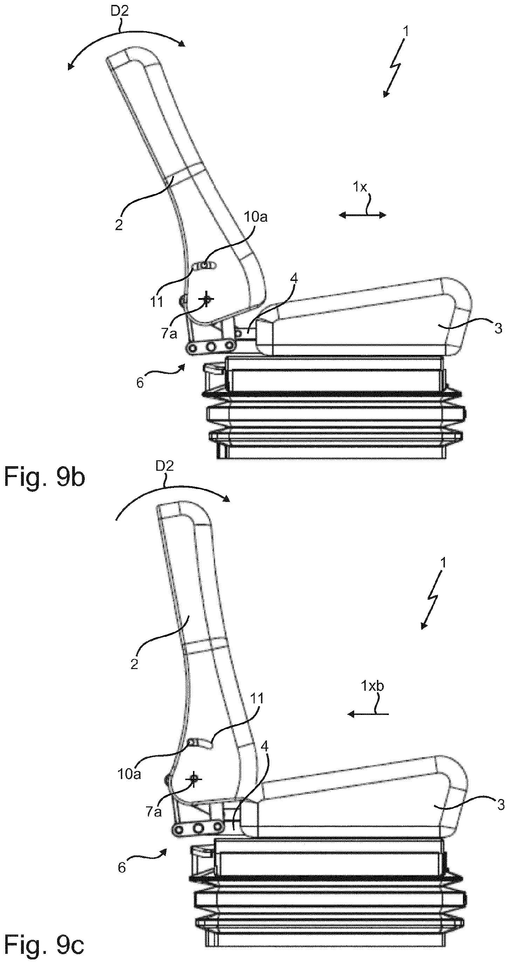

Es zeigen dabei die Figuren 9a und 9c jeweils eine Extremposition des Stifts 10 innerhalb des Langlochs 11. So ist gemäß der Figur 9a das Rückenlehnenteil 2 um die erste Achse 7a maximal nach hinten 1xb verschwenkt, da der Stift 10 innerhalb des Langlochs 11 an dessen vorderem Ende angeordnet ist; das Sitzflächenteil 3 ist ebenfalls in seiner vordersten Position. Analog dazu ist gemäß der Figur 9c das Rückenlehnenteil 2 um die erste Achse 7a maximal nach vorne 1xa verschwenkt, da der Stift 10 innerhalb des Langlochs 11 an dessen hinterem Ende angeordnet ist; das Sitzflächenteil 3 ist ebenfalls in seiner hintersten Position. Die Figur 9b zeigt Positionen des Rückenlehnenteils 2, des Stifts 10 und des Sitzflächenteils 3 zwischen den Extrempositionen gemäß den Figuren 9a und 9c.

Es versteht sich, dass es sich bei dem vorstehend erläuterten Ausführungsbeispiel lediglich um eine erste Ausgestaltung des erfindungsgemäßen Nutzfahrzeugsitzes handelt. Insofern beschränkt sich die Ausgestaltung der Erfindung nicht auf dieses Ausführungsbeispiel.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 1', 3', 5': Translationsbewegung
- 2', 4', 6': Rotationsbewegung
- 1x, 1xa, 1xb: Sitzlängsrichtung
- 1y: Sitzbreitenrichtung
- 1z: Sitzhöhenrichtung
- 2: Rückenlehnenteil
- 3: Sitzflächenteil
- 4: Sitzbasisteil
- 5, 6: Hebelanordnung
- 5a, 5b, 5c, 6a, 6b, 6c, 6d: Hebelelement
- 7a, 7b, 7c, 7d, 7e, 7f: Achse
- 8: Wellenelement
- 10a, 10b: Stift
- 11, 12: Langloch
- A1: fiktive Rotationsachse
- D1, D2: Drehbewegung
- E1: Ebene
- I, r: Seite
- P1, P2, P3: Pfeil
- PX1, PX2, PX3, PZ1, PZ2, PZ3: Position
- V: Fahrzeug
- x: Fahrzeuglängsrichtung
- y: Fahrzeugbreitenrichtung
- z: Fahrzeughöhenrichtung
- w1, w2: Neigungsgrad

## Patentansprüche

1. Fahrzeugsitz (1) mit einem Rückenlehnenteil (2) und einem Sitzflächenteil (3), welche jeweils mit einem Sitzbasisteil (4) verbunden angeordnet sind, wobei das Rückenlehnenteil (2) gegenüber dem Sitzbasisteil (4) verschwenkbar und federnd gelagert angeordnet ist, und wobei das Sitzflächenteil (3) gegenüber dem Sitzbasisteil (4) zumindest in Sitzlängsrichtung (1x) nach vorne (1xa) und nach hinten (1xb) verschiebbar angeordnet ist, wobei das Rückenlehnenteil (2) und das Sitzflächenteil (3) über eine erste Hebelanordnung (5) derart miteinander wirkverbunden sind, dass bei einer Federungsbewegung des Rückenlehnenteils (2) gegenüber dem Sitzbasisteil (4) in eine Richtung weg vom Sitzflächenteil (3) das Sitzflächenteil (3) in Sitzlängsrichtung (1x) nach hinten (1xb) verschiebbar ist,
**dadurch gekennzeichnet, dass**
ein oberes Ende des Rückenlehnenteils (2) bei der Federungsbewegung des Rückenlehnenteils (2) gegenüber dem Sitzbasisteil (4) in die Richtung weg vom Sitzflächenteil (3) in Sitzlängsrichtung (1x) nach hinten verschiebbar ist.

2. Fahrzeugsitz (1) nach Anspruch 1,
**dadurch gekennzeichnet, dass**
das Rückenlehnenteil (2) bei der Federungsbewegung gegenüber dem Sitzbasisteil (4) um eine in Sitzbreitenrichtung (1y) verlaufende fiktive Rotationsachse (A1) verschwenkbar ist,
wobei zwischen dem Rückenlehnenteil (2) und dem Sitzbasisteil (4) eine zweite Hebelanordnung (6) angeordnet ist, welche mittels einer ersten Achse (7a) schwenkbar mit dem Rückenlehnenteil (2) und mittels einer zweiten Achse (7b) schwenkbar mit dem Sitzbasisteil (4) verbunden ist.

3. Fahrzeugsitz (1) nach Anspruch 2,
**dadurch gekennzeichnet, dass**
ein erster Neigungsgrad (w1) des Rückenlehnenteils (2) gegenüber dem Sitzflächenteil (3) mittels einer Drehbewegung des Rückenlehnenteils (2) um die erste Achse (7a) verstellbar ist.

4. Fahrzeugsitz (1) nach Anspruch 3,
**dadurch gekennzeichnet, dass**
bei der Drehbewegung des Rückenlehnenteils (2) um die erste Achse (7a) in eine Richtung weg vom Sitzflächenteil (3) eine Position des Sitzflächenteils (3) in Sitzlängsrichtung (1x) nach vorne (1xa) verstellbar ist.

5. Fahrzeugsitz (1) nach einem der vorhergehenden Ansprüche,
**dadurch gekennzeichnet, dass**
die zweite Hebelanordnung (6) ein erstes Hebelelement (6a), welches mittels der ersten Achse (7a) schwenkbar mit dem Rückenlehnenteil (2) verbunden ist,
ein zweites Hebelelement (6b), welches mittels der zweiten Achse (7b) schwenkbar mit dem Sitzbasisteil (4) verbunden ist,
ein drittes Hebelelement (6c), welches mittels einer dritten Achse (7c) schwenkbar mit dem ersten Hebelelement (6a) und mittels einer vierten Achse (7d) schwenkbar mit dem zweiten Hebelelement (6a) verbunden ist, und
ein viertes Hebelelement (6d), welches mittels einer fünften Achse (7e) schwenkbar mit dem ersten Hebelelement (6a) und mittels einer sechsten Achse (7f) schwenkbar mit dem zweiten Hebelelement (6a) verbunden ist, umfasst,
wobei ein Abstand zwischen der ersten Achse (7a) und der dritten Achse (7c) veränderbar ist, so dass eine Position der fiktiven Rotationsachse (A1) in Sitzhöhenrichtung (1z) verstellbar ist.

6. Fahrzeugsitz (1) nach einem der vorhergehenden Ansprüche,
**dadurch gekennzeichnet, dass**
ein zweiter Neigungsgrad (w2) zwischen dem zweiten Hebelelement (6b) der zweiten Hebelanordnung (6) und dem Sitzbasisteil (4) veränderbar ist, wodurch die Position der fiktiven Rotationsachse (A1) in Sitzlängsrichtung (1x) verstellbar ist.

7. Fahrzeugsitz (1) nach einem der Ansprüche 2-6,
**dadurch gekennzeichnet, dass**
die erste Hebelanordnung (5) ein starr mit der ersten Achse (7a) verbundenes erstes Hebelelement (5a) und ein damit schwenkbar verbundenes zweites Hebelelement (5b) umfasst, welches wiederum schwenkbar mit dem Sitzflächenteil (3) verbunden ist.

8. Fahrzeugsitz (1) nach einem der Ansprüche 5-7,
**dadurch gekennzeichnet, dass**
eine Verstellung der Position der fiktiven Rotationsachse (A1) manuell oder mittels eines elektrischen oder pneumatischen Antriebselements, insbesondere automatisch, erfolgt und/ oder die Position der fiktiven Rotationsachse (A1) arretierbar ist.

## Claims

1. A vehicle seat (1) comprising a backrest portion (2) and a seating surface portion (3), each of which is arranged to be connected with a seat base portion (4), wherein the backrest portion (2) is resiliently arranged and supported to be able to swivel with respect to the seat base portion (4), and wherein the seating surface portion (3) is arranged to be able to move in at least a longitudinal direction of the seat (1x) frontwards (1xa) and rearwards (1xb) with respect to the seat base portion (4), wherein the backrest portion (2) and the seating surface portion (3) are operatively connected together via a first lever arrangement (5) in such a way that the seating surface portion (3) is able to move rearwards (1xb) in the longitudinal direction of the seat (1x) when the backrest portion (2) makes a suspending movement with respect to the seat base portion (4) in a direction away from the seating surface portion (3),
**characterised in that**
an upper end of the backrest portion (2) is able to move rearwards in the longitudinal direction of the seat (1x) when said suspending movement of the backrest portion (2) is made with respect to the seat base portion (4) in the direction away from the seating surface portion (3).

2. The vehicle seat (1) according to claim 1,
**characterised in that**,
when said suspending movement is made with respect to the seat base portion (4), the backrest portion (2) is able to swivel around an imaginary rotational axis (A1) extending in the lateral direction of the seat (1y),
wherein a second lever arrangement (6) is arranged between the backrest portion (2) and the seat base portion (4), said second lever arrangement being swivellably connected with the backrest portion (2) by way of a first axis (7a) and swivellably connected with the seat base portion (4) by way of a second axis (7b).

3. The vehicle seat (1) according to claim 2,
**characterised in that**
a first degree of inclination (w1) of the backrest portion (2) is adjustable with respect to the seating surface portion (3) by way of rotational movement of the backrest portion (2) around the first axis (7a).

4. The vehicle seat (1) according to claim 3,
**characterised in that**
a position of the seating surface portion (3) is adjustable frontwards (1xa) in the longitudinal direction of the seat (1x) when the backrest portion (2) rotates about the first axis (7a) in a direction away from the seating surface portion (3).

5. The vehicle seat (1) according to one of the preceding claims,
**characterised in that**
the second lever arrangement (6) comprises a first lever element (6a), which is swivellably connected with the backrest portion (2) by way of the first axis (7a), a second lever element (6b), which is swivellably connected with the seat base portion (4) by way of the second axis (7b),
a third lever element (6c), which is swivellably connected with the first lever element (6a) by way of a third axis (7c) and swivellably connected with the second lever element (6b) by way of a fourth axis (7d), and
a fourth lever element (6d), which is swivellably connected with the first lever element (6a) by way of a fifth axis (7e) and swivellably connected with the second lever element (6b) by way of a sixth axis (7f),
wherein a distance between the first axis (7a) and the third axis (7c) is variable such that a position of the imaginary rotational axis (A1) is adjustable in the vertical direction of the seat (1z).

6. The vehicle seat (1) according to one of the preceding claims,
**characterised in that**
a second degree of inclination (w2) between the second lever element (6b) of the second lever arrangement (6) and the seat base portion (4) is variable, as a result of which the position of the imaginary rotational axis (A1) is adjustable in the longitudinal direction of the seat (1x).

7. The vehicle seat (1) according to any of claims 2-6,
**characterised in that**
the first lever arrangement (5) comprises a first lever element (5a) rigidly connected with the first axis (7a) as well as a second lever element (5b), which is swivellably connected with said first lever element and which is in turn swivellably connected with the seating surface portion (3).

8. The vehicle seat (1) according to any of claims 5-7,
**characterised in that**
adjustment of the position of the imaginary rotational axis (A1) takes place manually or by way of an electric or pneumatic drive element, in particular automatically, and/or that the position of the imaginary rotational axis (A1) is able to be locked.

## Revendications

1. Siège de véhicule (1) comportant une partie dossier (2) et une partie assise de siège (3), qui sont chacune disposées reliées avec une partie base de siège (4), dans lequel la partie dossier (2) est disposée pivotante et montée élastiquement par rapport à la partie base de siège (4), et dans lequel la partie assise de siège (3) est disposée déplaçable vers l'avant (1xa) et vers l'arrière (1xb) au moins dans la direction longitudinale de siège (1x) par rapport à la partie base de siège (4), dans lequel la partie dossier (2) et la partie assise de siège (3) sont reliées entre elles de façon fonctionnelle par l'intermédiaire d'un premier dispositif à levier (5) de telle sorte que, lors d'un mouvement de suspension de la partie dossier (2) par rapport à la partie base de siège (4) dans une direction s'éloignant de la partie assise de siège (3), la partie assise de siège (3) est déplaçable vers l'arrière (1xb) dans la direction longitudinale de siège (1x),
**caractérisé par le fait qu'**
une extrémité supérieure de la partie dossier (2) est déplaçable vers l'arrière dans la direction longitudinale de siège (1x), lors du mouvement de suspension de la partie dossier (2) par rapport à la partie base de siège (4) dans la direction s'éloignant de la partie assise de siège (3).

2. Siège de véhicule (1) selon la revendication 1,
**caractérisé par le fait que**
la partie dossier (2) est apte à pivoter autour d'un axe de rotation fictif (A1) s'étendant dans la direction de la largeur de siège (1y) lors du mouvement de suspension par rapport à la partie base de siège (4),
dans lequel, entre la partie dossier (2) et la partie base de siège (4), est disposé un second dispositif à levier (6), lequel est relié avec la partie dossier (2) en étant apte à pivoter au moyen d'un premier axe (7a) et avec la partie base de siège (4) en étant apte à pivoter au moyen d'un deuxième axe (7b).

3. Siège de véhicule (1) selon la revendication 2,
**caractérisé par le fait qu'**
un premier degré d'inclinaison (w1) de la partie dossier (2) est réglable par rapport à la partie assise de siège (3) au moyen d'un mouvement de rotation de la partie dossier (2) autour du premier axe (7a).

4. Siège de véhicule (1) selon la revendication 3,
**caractérisé par le fait qu'**
une position de la partie assise de siège (3) est réglable vers l'avant (1xa) dans la direction longitudinale de siège (1x) lors du mouvement de rotation de la partie dossier (2) autour du premier axe (7a) dans une direction s'éloignant de la partie assise de siège (3).

5. Siège de véhicule (1) selon l'une des revendications précédentes,
**caractérisé par le fait que**
le second dispositif à levier (6) comporte un premier élément levier (6a), lequel est relié avec la partie dossier (2) en étant apte à pivoter au moyen du premier axe (7a), un deuxième élément levier (6b), lequel est relié avec la partie base de siège (4) en étant apte à pivoter au moyen du deuxième axe (7b),
un troisième élément levier (6c), lequel est relié avec le premier élément levier (6a) en étant apte à pivoter au moyen d'un troisième axe (7c) et avec le deuxième élément levier (6a) en étant apte à pivoter au moyen d'un quatrième axe (7d), et
un quatrième élément levier (6d), lequel est relié avec le premier élément levier (6a) en étant apte à pivoter au moyen d'un cinquième axe (7e) et avec le deuxième élément levier (6a) en étant apte à pivoter au moyen d'un sixième axe (7f),
dans lequel une distance entre le premier axe (7a) et le troisième axe (7c) est modifiable de telle sorte qu'une position de l'axe de rotation fictif (A1) est réglable dans la direction de la hauteur de siège (1z).

6. Siège de véhicule (1) selon l'une des revendications précédentes,
**caractérisé par le fait qu'**
un second degré d'inclinaison (w2) est modifiable entre le deuxième élément levier (6b) du second dispositif à levier (6) et la partie base de siège (4), ce par quoi la position de l'axe de rotation fictif (A1) est réglable dans la direction longitudinale de siège (1x).

7. Siège de véhicule (1) selon l'une des revendications 2 à 6,
**caractérisé par le fait que**
le premier dispositif à levier (5) comporte un premier élément levier (5a) relié de façon rigide avec le premier axe (7a) et un second élément levier (5b) qui est relié en étant apte à pivoter avec le premier élément levier et lequel est à son tour relié avec la partie assise de siège (3) en étant apte à pivoter.

8. Siège de véhicule (1) selon l'une des revendications 5 à 7,
**caractérisé par le fait qu'**
un réglage de la position de l'axe de rotation fictif (A1) a lieu manuellement ou au moyen d'un élément d'entraînement électrique ou pneumatique, en particulier automatiquement, et/ou la position de l'axe de rotation fictif (A1) est apte à être bloqué.
